(19) Europäisches Patentamt
European Patent Office
Office européen des brevets

(11) EP 2 225 288 B1

(12) **EUROPEAN PATENT SPECIFICATION**

(45) Date of publication and mention of the grant of the patent:
**29.08.2018 Bulletin 2018/35**

(21) Application number: **08866579.9**

(22) Date of filing: **12.12.2008**

(51) Int Cl.:
***C08F 4/651*** *(2006.01)* ***C08F 4/646*** *(2006.01)*
***C08F 10/06*** *(2006.01)* ***C08F 4/654*** *(2006.01)*

(86) International application number:
**PCT/US2008/086551**

(87) International publication number:
**WO 2009/085649 (09.07.2009 Gazette 2009/28)**

# (54) SELF-LIMITING CATALYST COMPOSITION WITH BIDENTATE INTERNAL DONOR

SELBSTLIMITIERENDE KATALYSATORZUSAMMENSETZUNG MIT ZWEIZÄHNIGEM INTERNEM DONATOR

COMPOSITION DE CATALYSEUR AUTO-LIMITANT CONTENANT UN DONNEUR INTERNE BIDENTATE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.12.2007 US 15978**

(43) Date of publication of application:
**08.09.2010 Bulletin 2010/36**

(73) Proprietor: **W.R. Grace & CO. - CONN.**
**Columbia, MD 21044 (US)**

(72) Inventors:
- **CHEN, Linfeng**
**Sugar Land**
**TX 77478 (US)**
- **CAMPBELL, Richard, E., Jr.**
**Midland**
**MI 48642 (US)**

(74) Representative: **J A Kemp**
**14 South Square**
**Gray's Inn**
**London WC1R 5JJ (GB)**

(56) References cited:

| | |
|---|---|
| **EP-A- 1 260 523** | **WO-A-00/55215** |
| **WO-A-00/63261** | **WO-A-02/12357** |
| **WO-A-2004/024785** | **WO-A-2005/030815** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND

The present disclosure relates to stereoselective Ziegler-Natta catalyst compositions for use in polymerization reactions and propylene polymerization in particular.

It is known that the addition of a silane composition to a Ziegler-Natta catalyst system having a phthalate internal electron donor improves catalyst selectivity. Mixing the silane composition with an activity limiting agent (ALA), such as aromatic carboxylic acid ester, further provides the Ziegler-Natta catalyst system with a self-extinguishing property. Current research indicates a growing concern about the health risks associated with phthalates. It would be desirable to develop other Ziegler-Natta catalyst systems with selectivity control that are sell-extinguishing and do not require a phthalate-bascd internal electron donor.

SUMMARY

The present disclosure is directed to catalyst compositions with high catalyst activity and high stereoselectivity and are also self-extinguishing. The present catalyst compositions do not require a phthalate-based internal electron donor.

In an embodiment, a catalyst composition is provided. The catalyst composition includes one or more Ziegler-Natta procatalyst compositions containing one or more transition metal compounds and an internal electron donor. The internal electron donor is a bidentate compound. The catalyst composition also includes an aluminum containing cocatalyst. The catalyst composition further includes an external electron donor. The external electron donor is a mixture of a selectivity determining agent and an activity limiting agent.

The bidentate compound contains at least two oxygen-containing functional groups, the oxygen-containing functional groups separated by at least one saturated $C_2$-$C_{10}$ hydrocarbon chain which may optionally contain heteroatom(s). The bidentate compound excludes phthalates. The bidentate compound may be a diether, a succinate, a glutarate, a diol ester, and any combination thereof.

In an embodiment, a catalyst composition is provided. The catalyst composition includes one or more Ziegler-Natta procatalyst compositions. The procatalyst composition includes one or more transition metal compounds and an internal electron donor that is a diether. The procatalyst composition also includes one or more aluminum containing cocatalysts. The catalyst composition further includes an external electron donor. The external electron donor is a mixture of a selectivity determining agent and an activity limiting agent.

In an embodiment, the diether may be 2,2-diisobutyl-1,3-dimethoxypropane. 2.2-dicyclopentyl-1,3-dimethoxypropane, 2-isobutyl-2-isopropyl-1,3-dimethoxypropane or 9,9-bis(methoxymethyl)fluorene. The selectivity determining agent may be an alkoxysilane composition or a diether. The alkoxysilane composition may be n-propyltrimethoxysilane, dicyclopentyldimethoxysilane or methylcyclohexyldimethoxysilane, or a mixture of alkoxysilanes containing n-propyltrimethoxysilane, dicyclopentyldimethoxysilane and/or methylcyclohexyldimethoxysilane. The selectivity determining agent may also be a diether that may be the same as or different from the internal electron donor diether previously disclosed, such as 2,2-dicyclopentyl-1,3-dimethoxypropane. The activity limiting agent may be an aromatic mono- or poly-carboxylic acid ester such as ethyl *p*-ethoxybenzoate, a poly(alkene glycol), a poly(alkene glycol) ester, or a fatty acid ester.

In an embodiment, another catalyst composition is provided. The catalyst composition includes one or more Ziegler-Natta procatalyst compositions. The procatalyst composition includes one or more transition metal compounds and an internal electron donor that is a succinate. The procatalyst composition further includes one or more aluminum containing cocatalysts. The catalyst composition further includes an external electron donor. The external electron donor is a mixture of a selectivity determining agent and an activity limiting agent.

In an embodiment, the succinate is diethyl 2,3-diisopropylsuccinate. The selectivity determining agent may be an alkoxysilane composition or a diether. The alkoxysilane composition may be n-propyltrimethoxysilane, dicyclopentyldimethoxysilane methylcyclohexyldimethoxysilane, or a mixture of alkoxysilanes containing n-propyltrimethoxysilane, dicyclopentyldimethoxysilane and/or methylcyclohexyldimethoxysilane. The selectivity determining agent may also be a diether that may be the same as or different from the internal donor diether disclosed previously, such as 2,2-dicyclopentyl-1,3-dimethoxypropene. The activity limiting agent may be an aromatic mono- or poly-carboxylic acid ester such as ethyl *p*-ethoxybenzoate, a poly(alkene glycol), a poly(alkene glycol) ester, or a fatty acid ester.

In an embodiment, the selectivity determining agent is a diether and the activity limiting agent is a carboxylic acid ester. For example, the selectivity determining agent may be 2,2-dicyclopentyl-1,3-dimethoxypropane and the activity limiting agent may be a fatty acid ester.

In an embodiment, another catalyst composition is provided. The catalyst composition includes one or more Ziegler-Natta procatalyst compositions. The procatalyst composition includes one or more transition metal compounds

and an internal electron donor that is a diol ester. The procatalyst also includes one or more aluminum containing cocatalysts. The catalyst composition further includes an external electron donor. The external electron donor is a mixture of a selectivity determining agent and an activity limiting agent

In an embodiment, the diol ester is 2,4-pentanediol di(p-n-butyl)benzoate. The selectivity determining agent may be an alkoxysilane composition and the activity limiting agent may be an aromatic carboxylic acid ester. For example, the selectivity determining agent may be methylcyclohexyldimethoxysilane and the activity limiting agent may be ethyl *p*-ethoxybenzoate.

The presence of the external electron donor in the present catalyst compositions disclosed herein makes the present catalyst compositions self-extinguishing. Any of the catalyst compositions disclosed herein may include a molar ratio of aluminum to total external electron donor from 0.5:1 to 4:1. For polymeric or oligomeric activity limiting agents, the catalyst composition may include a molar ratio of aluminum to external electron donor from 1.0:1 to 50:1.

The polymerization process includes contacting, under polymerization conditions, an olefin with a catalyst composition. The catalyst composition includes a Ziegler-Natta procatalyst composition having a transition metal compound and an internal electron donor. The internal electron donor is a bidentate compound excluding phthalates. The catalyst composition also includes an aluminum containing cocatalyst, and an external electron donor. The external electron donor is a mixture of a selectivity determining agent and an activity limiting agent. The method further includes forming a polyolefin composition.

The polymerization process includes contacting propylene with the catalyst composition and forming a propylene containing polymer having a xylene solubles content from 0.5% to 10%. In a further embodiment, the polymerization process includes contacting propylene and ethylene with the catalyst composition and forming a propylene and ethylene copolymer.

The polymerization process includes controlling the aluminum to total external electron donor ratio from 0.5:1 to 4:1 during the polymerization reaction. For polymeric or oligomeric activity limiting agents, the catalyst composition may include a molar ratio of aluminum to external electron donor from 1.0:1 to 50:1.

An advantage of the present disclosure is a phthalate-free catalyst composition for the production of polyolefins.

An advantage of the present disclosure is the provision of an improved catalyst composition.

An advantage of the present disclosure is a catalyst composition that produces a phthalate-free polyolefin and a phthalate-free polypropylene composition in particular.

An advantage of the present disclosure is the provision of a self-extinguishing catalyst composition that does not contain a phthalate internal electron donor.

An advantage of the present disclosure is the provision of a polymerization process with reduced reactor fouling and reduced polymer agglomeration.

An advantage of the present disclosure is the production of a phthalate-free propylene containing polymer with high isotacticity and low xylene soluble content.

## DETAILED DESCRIPTION

The term "composition," as used herein, includes a mixture of materials which comprise the composition, as well as reaction products and decomposition products formed from the materials of the composition.

The term "polymer" is a macromolecular compound prepared by polymerizing monomers of he same or different type. "Polymer" includes homopolymers, copolymers, terpolymers, and interpolymers. The term "interpolymer" means a polymer prepared by the polymerization of at least two types of monomers or comonomers. It includes, but is not limited to, copolymers (which usually refers to polymers prepared from two different types of monomers or comonomers, terpolymers (which usually refers to polymers prepared from three different types of monomers or comonomers), and tetrapolymers (which usually refers to polymers prepared from four different types of monomers or comonomers).

As discussed above, the term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The terms "blend" or "polymer blend," as used herein, mean a composition of two or more polymers. Such a blend may or may not be miscible. Such a blend may or may not be phase separated. Such a blend may or may not contain one or more domain configurations, as determined from transmission electron spectroscopy.

The present catalyst composition contains a Ziegler-Natta procatalyst composition, an internal electron donor, a cocatalyst, and an external electron donor, each of which shall be discussed in detail below. Any conventional Ziegler-Natta procatalyst may be used in the present catalyst composition as is commonly known in the art. In an embodiment, the Ziegler-Natta procatalyst composition contains a transition metal compound and a Group 2 metal compound. The transition metal compound may be a solid complex derived from a transition metal compound, for example, titanium-, zirconium-, chromium- or vanadium-hydrocarbyloxides, hydrocarbyls, halides, or mixtures thereof.

The transition metal compound has the general formula $TrX_x$ where Tr is the transition metal, X is a halogen or a $C_{1-10}$ hydrocarboxyl or hydrocarbyl group, and x is the number of such X groups in the compound in combination with a Group 2 metal compound. Tr may be a Group 4, 5 or 6 metal. In an embodiment, Tr is a Group 4 metal, such as titanium. X may be chloride, bromide, $C_{1-4}$ alkoxide or phenoxide, or a mixture thereof. In an embodiment. X is chloride.

Examples of suitable transition metal compounds that may be used to form the Ziegler-Natta procatalyst composition are $TiCl_4$, $ZrCl_4$, $TiBr_4$, $TiCl_3$, $Ti(OC_2H_5)_3Cl$, $Zr(OC_2H_5)_3Cl$, $Ti(OC_2H_5)_3Br$, $Ti(OC_3H_7)_2Cl_2$, $Ti(OC_6H_5)_2Cl_2$, $Zr(OC_2H_5)_2Cl_2$, and $Ti(OC_2H_5)Cl_3$. Mixtures of such transition metal compounds may be used as well. No restriction on the number of transition metal compounds is made as long as at least one transition metal compound is present. In an embodiment, the transition metal compound is a titanium compound.

Examples of suitable Group 2 metal compounds include magnesium halides, dialkoxymagnesiums, alkoxymagnesium halides, magnesium oxyhalides, dialkylmagncsiums, and carboxylates of magnesium. In an embodiment, the Group 2 metal compound is magnesium dichloride.

In a further embodiment, the Ziegler-Natta procatalyst composition is a mixture of titanium moieties supported on or otherwise derived from magnesium compounds. Suitable magnesium compounds include anhydrous magnesium chloride, magnesium chloride adducts, magnesium dialkoxides or aryloxides, or carboxylated magnesium dialkoxides or aryloxides. In an embodiment, the magnesium compound is a magnesium di($C_{1-4}$)alkoxide, such as diethoxymagnesium.

Examples of suitable titanium moieties include titanium alkoxides, titanium aryloxides, and/or titanium halides. Compounds used to prepare the Ziegler-Natta procatalyst composition include one or more magnesium-di($C_{1-4}$)alkoxides, magnesium dihalides, magnesium alkoxyhalides, or mixtures thereof and one or more titanium tetra($C_{1-4}$) alkoxides, titanium tetrahalides, titanium($C_{1-4}$)alkoxyhalides, or mixtures thereof.

A precursor composition may be used to prepare the Ziegler-Natta procatalyst composition as is commonly known in art. The precursor composition may be prepared by the chlorination of the foregoing mixed magnesium compounds, titanium compounds, or mixtures thereof, and may involve the use of one or more compounds, referred to as "clipping agents", that aid in forming or solubilizing specific compositions via a solid/solid metathesis. Examples of suitable clipping agents include trialkylborates, especially triethylborate, phenolic compounds, especially cresol, and alkoxysilanes.

In an embodiment, the precursor composition is a mixed magnesium/titanium compound of the formula $Mg_d Ti(OR^e)_f X_g$ wherein $R^e$ is an aliphatic or aromatic hydrocarbon radical having 1 to 14 carbon atoms or COR' wherein R' is an aliphatic or aromatic hydrocarbon radical having 1 to 14 carbon atoms; each $OR^e$ group is the same or different; X is independently chlorine, bromine or iodine; d is 0.5 to 56; or 2-4, or 3; f is 2 to 116, or 5 to 15; and g is 0.5 to 116, or 1 to 3. The precursor may be prepared by controlled precipitation through removal of an alcohol from the reaction mixture used in its preparation. In an embodiment, the reaction medium includes a mixture of an aromatic liquid, especially a chlorinated aromatic compound, such as chlorobenzene or chlorinated toluene, with an alkanol, especially ethanol, and an inorganic chlorinating agent. Suitable inorganic chlorinating agents include chlorine derivatives of silicon, aluminum and titanium, such as titanium tetrachloride or titanium trichloride, and titanium tetrachloride in particular. Removal of the alkanol from the solution used in the chlorination, results in precipitation of the solid precursor, having a desirable morphology and surface area. Moreover, the resulting precursor is particularly uniform particle sized and resistant to particle crumbling as well as degradation of the resulting procatalyst.

The precursor is next converted to a solid procatalyst by further reaction (halogenation) with an inorganic halide compound, preferably a titanium halide compound, and incorporation of an internal electron donor. If not already incorporated into the precursor in sufficient quantity, the internal electron donor may be added separately before, during or after halogenation. This procedure may be repeated one or more times, optionally in the presence of additional additives or adjuvants, and the final solid product washed with an aliphatic solvent. Any method of making, recovering and storing the solid procatalyst is suitable for use in the present disclosure.

One suitable method for halogenation of the precursor is by reacting the precursor at an elevated temperature with a tetravalent titanium halide, optionally in the presence of a hydrocarbon or halohydrocarbon diluent. The preferred tetravalent titanium halide is titanium tetrachloride. The optional hydrocarbon or halohydrocarbon solvent employed in the production of olefin polymerization procatalyst preferably contains up to 12 carbon atoms inclusive, or up to 9 carbon atoms inclusive. Exemplary hydrocarbons include pentane, octane, benzene, toluene, xylene, alkylbenzenes, and decahydronaphthalene. Exemplary aliphatic halohydrocarbons include methylene chloride, methylene bromide, chloroform, carbon tetrachloride, 1,2-dibromoethane, 1,1,2-trichloroethane, trichlorocyclohexane, dichlorofluoromethane and tetrachlorooctane. Exemplary aromatic halohydrocarbons include chlorobenzene (MCB), bromobenzene, dichlorobenzenes and chlorotoluenes. The aliphatic halohydrocarbon may be a compound containing at least two chloride substituents such as carbon tetrachloride or 1,1,2-trichloroethane. The aromatic halohydrocarbon may be chlorobenzene or o-chlorotoluene.

The halogenation may be repeated one or more times, optionally accompanied by washing with an inert liquid such as an aliphatic or aromatic hydrocarbon or halohydrocarbon between halogenations and following halogenation.

Further optionally one or more extractions involving contacting with an inert liquid diluent, especially an aliphatic or aromatic hydrocarbon, especially at an elevated temperature greater than 100°C, or greater than 110°C, may be employed to remove labile species, especially $TiCL_4$.

In an embodiment, the Ziegler-Natta procatalyst composition includes a solid catalyst component obtained by (i) suspending a dialkoxy magnesium in an aromatic hydrocarbon that is liquid at normal temperatures, (ii) contacting the dialkoxy magnesium with a titanium halide and further (iii) contacting the resulting composition a second time with the titanium halide, and contacting the dialkoxy magnesium with one of the following internal donors (discussed below) at some point during the treatment with the titanium halide in (ii).

The Ziegler-Natta procatalyst composition includes an internal electron donor. The internal electron donor provides tacticity control and catalyst crystallite sizing. In an embodiment, the internal electron donor is a bidentate compound. As used herein, "a bidentate compound" is a molecule or compound that contains at least two oxygen-containing functional groups (the oxygen-containing functional groups being the same or different), the oxygen-containing functional groups separated by at least one saturated $C_2$-$C_{10}$ hydrocarbon chain, the bidentate compound excluding phthalates. Examples of suitable oxygen-containing functional groups for the bidentate compound include oxygen, carboxylate, carbonyl, ketone, ether, amide, sulfoxide, sulfone, sulfonate, phosphite, phosphinate, phosphate, phosphonate, and phosphine oxide. One or more carbon atoms in the $C_2$ - $C_{10}$ chain may be substituted with heteroatoms from Group 14, 15, and 16. One or more H atoms in the $C_2$ - $C_{10}$ chain may be substituted with alkyl, cycloalkyl, alkenyl, cycloalkenyl, aryl, alkylaryl, aralkyl, halogen, or functional groups containing a heteroatom from Group 14, 15, or 16.

Examples of bidentate compositions suitable as internal electron donors include diethers, succinates, glutarates, diol esters, and any combination thereof.

In an embodiment, the internal electron donor is a 1,3-diether. The diether may be a dialkyl di-ether compound represented by the following formula,

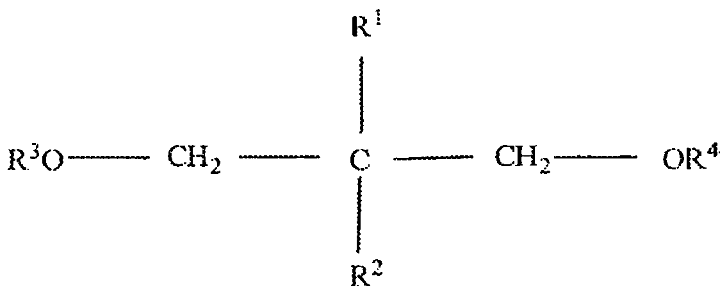

wherein $R^1$ to $R^4$ are independently of one another an alkyl, aryl or aralkyl group having up to 20 carbon atoms, which may optionally contain a group 14, 15, 16, or 17 heteroatom, provided that $R^1$ and $R^2$ may be a hydrogen atom. $R_1$ and $R_2$ may also be linked to form a cyclic structure, such as cyclopentadiene or fluorene. The dialkylether may linear or branched, and may include one or more or more of the following groups: alkyl, cycloaliphatic, aryl, alkylaryl or arylalkyl radicals with 1-18 carbon atoms, and hydrogen. Examples of suitable dialkyl diether compounds include dimethyl diether, diethyl diether, dibutyl diether, methyl ethyl diether, methyl butyl diether, methyl cyclohcxyl diether, 2,2-dimethyl-1,3-dimethoxypropane, 2,2-diothyl-1,3-dimethoxypropane, 2,2-di-n-butyl-1,3-dimethoxypropane, 2,2-diisobutyl-1.3-dimethoxypropane, 2-ethyl-2-n-butyl-1,3-dimethoxypropane, 2-n-propyl-2-cyclopentyl-1.3-dimethoxypropane, 2,2-dimethyl-1,3-diethoxypropane, 2-n-propyl-2-cyclohexyl-1,3-diethoxypropan, 2-(2-ethylhexyl)-1,3-dimethoxypropane, 2-isopropy-1,3-dimethoxypropane, 2-n-butyl-1,3-dimethoxypropane, 2-sec-butyl-1,3-dimethoxypropane, 2-cyclohexyl-1,3-dimethoxypropane, 2-phenyl-1,3-diethoxypropane, 2-cumyl-1,3-diethoxypropane, 2-(2-phenylethyl)-1,3-dimethoxypropane, 2-(2-cyclohexylcthyl)1,3-dimethoxypropane, 2-(p-chlorophenyl)-1,3-dimelhoxypropane, 2-(diphenylmethyl)-1,3-dimethoxypropane, 2-(1-naphthyl)-1,3-dimethoxypropane, 2-(fluorophenyl)-1,3-dimethoxypropane, 2-(1-decahydronaphthyl)-1,3-dimethoxypropane, 2-(p-t-butylphenyl)-1,3-dimethoxypropane, 2,2-dicyclohexyl-1,3-dimethoxypropane, 2,2-di-n-propyl-1,3-dimethoxypropane, 2-methyl-2-n-propyl-1,3-dimethoxypropane, 2-methyl-2-benzyl-1,3-dimethoxypropane, 2-methyl-2-ethyl-1,3-dimcthoxypropane, 2-methyl-2-phenyl-1,3-dimethoxypropane, 2-methyl-2-cycloboxyl-1,3-dimethoxypropane, 2,2-bis(p-chlorophenyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxy propane, 2-methyl-2-isopropyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2,2-diisobutyl-1,3-diethoxypropane, 3,2-diisobutyl-1,3-di-n-butoxyptopane, 2-isobutyl-2-isopropyl-1,3-dimethoxypropane, 2,2-di-sec-butyl-1,3-dimethoxypropane, 2,2-di-t-butyl-1,3-dimethoxypropane, 2,2-dinoopentyl-1,3-dimethoxypropane, 2-isopropyl-2-isopentyl-]1,3-dimethoxypropane, 2-phenyl-2-benzyl-1,3-dimethoxypropane, 2-cyclohexyl-2-cyclohexylmethyl-1,3-dimethoxypropane, 2-isopropyl-2-(3,7-dimethyloetyl)-1,3-dimethoxypropane, 2,2-diisopropyl-1,3-dimethoxypropane, 2-isopropyl-2-cyclohexylmothyl-1,3-dimethoxypropane, 2,2-diisopentyl-1,3-dimethoxypropane, 2-isopropyl-2-cyclohexyl-1,3-dimcthoxypropane. 2-isopropyl-2-cyclopentyl-1,3-dimethoxypropane, 2,2-dicylopentyl-1,3-dimethoxypropane, 2-n-heptyl-2-n-pentyl-1,3-dimethoxypropane, and 9,9-bis(methoxymethyl)fluorene. In an embodiment, the internal electron donor is 2,2-di-iso-butyl-1,3-dimethoxypropane, 2,2-dicyclohexyl-1,3-dimethoxypropane, 2-isobutyl-2-isopropyl-1,3-dimethoxypropane, or 9,9-bis(methoxymethyl)fluorene.

In an embodiment, the internal election donor is a succinate composition having the following formula:

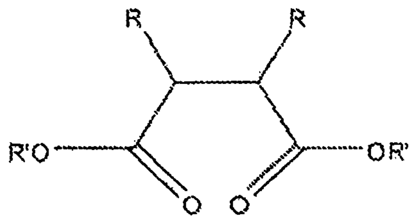

wherein R and R' may be the same or different, R and/or R' including one or more of the following groups: linear or branched alkyl, alkenyl, cycloalkyl, aryl, arylalkyl or alkylaryl group, optionally containing heteroatoms. One or more ring structures can be formed via one or both 2- and 3-position carbon atom. Examples of suitable succinates include diethyl 2,3-bis(trimethylsilyl)succinate, diethyl 2-sec-butyl-3-methylsuccinate, diethyl 2-(3,3,3-trifluoropropyl)-3-mothylsuccinate, diethyl 2,3-bis(2-ethylbutyl) succinate, diethyl 2,3-dicthyl-2-isopropylsuccinate, diethyl 2,3-diisopropyl-2-methylsuccinate, diethyl 2,3-dicyclohexyl-2-methylsuccinate, diethyl 2,3-dibenzylsuccinate, diethyl 2,3-diisopropylsuccinate, diethyl 2,3-bis (cyclohexylmethyl)succinate, diethyl 2,3-di-t-butylsuccinate, diethyl 2,3-diisobutylsuccinate, diethyl 2,3-dineopentylsuccinate, diethyl 2,3-diisopentylsuccinate, diethyl 2,3-(1-trifluoromethyl-ethyl)succinate, diethyl 2-(9-fluorenyl)succinate, diethyl 2-isopropyl-3-isobutylsuccinate, diethyl 2-t-bulyl-3-isopropylsuccinate, diethyl 2-isopropyl-3-cyclohexylsuccinate, diethyl 2-isopentyl-3-cyclohexylsuccinate, diethyl 2-cyclohexyl-3-cyclopentylsuccinate, diethyl 2,2,3,3-tetramethylsuccinate, diethyl 2,2,3,3-tetraethylsuccinate, diethyl 2,2,3,3-tetra-n-propylsuccinate, diethyl 2,3-diethyl-2,3-diisopropylsuccinate, diisobutyl 2,3-bis(trimethylsilyl)succinate, diisobutyl 3-sec-butyl-3-methylsuccinate, diisobutyl 2-(3,3,3-trifluoropropyl)-3-methylsuccinate, diisobutyl 2,3-bis(2-ethylbutyl)succinate, diisobutyl 2.3-diethyl-2 isopropylsuccinate, diisobutyl 2,3-diisopropyl-2-methylsuccinate, diisobutyl 2,3-dicyclohexyl-2-methylsuccinate, diisobutyl 2,3-dibenzylsuccinate, diisobutyl 2,3-diisopropylsuccinate, diisobutyl 2,3-bis(cyclohexylmethyl)succinate, diisobutyl 2,3-di-t-butylsuccinate, diisobutyl 2,3-diisobutylsuccinate, diisobutyl 2,3-dineopentylsuccinate, diisobutyl 2,3-diisopentylsuccinate, diisobutyl 2,3-bis(3,3,3-trifluoropropyl)succinate, diisobutyl 2,3-di-n-propylsuccinate, diisobutyl 2-(9-fluorenyl)succinate, diisobutyl 2-isopropyl-3-isobutylsuccinate, diisobutyl 2-t-butyl-3-isopropylsuccinate, diisobutyl 2-isopropyl-3-cyclohexylsuccinate, diisobutyl 2-isopentyl-3-cyclohexylsuccinate, diisobutyl 2-n-propyl-3-(cyclohexylmethyl)succinate, diisobutyl 2-cyclohexyl-3-cyclopentylsuccinate, diisobutyl 2,2,3,3-tetramethylsuccinate, diisobutyl 2,2,3,3-tetraethylsuccinate, diisobutyl 2,2,3,3-tetra-n-propylsuccinale, diisobutyl 2,3-diethyl-2,3-diisopropylsuccinate, dincopentyl 2,3-bis(trimethylsilyl)succinate, dineopentyl 2,2-di-sec-butyl-3-methylsuccinate, dineopentyl 2-(3,3,3-trifluoropropyl)-3-methylsuccinate, dineopentyl 2,3 bis-(2-ethylbutyl)succinate, dineopentyl 2,3-diethyl-2-isopropylsuccinate, dineopentyl 2,3-diisopropyl-2-methylsuccinate, dineopentyl 2,3-dicyclohexyl-2-methylsuccinate, dineopentyl 2,3-dibenzylsuccinate, dineopentyl 2,3-diisopropylsuccinate, dineopentyl 2,3-bis-(cyclohexylmethyl)succinate, dineopentyl 2,3-di-t-butylsuccinate, dineopentyl 2,3-diisobutylsuccinate, dineopentyl 2,3-dineopentylsuccinate, dineopentyl 2.3-diisopentylsuccinate, dineopentyl 2,3-bis(3,3,3-trifluoropropyl)succinate, dineopentyl 2,3-n-propylsuccinate, dineopentyl 2-(9-fluorenyl)succinate, dineopentyl 2-isopropyl-3-isobutylsuccinate, dineopentyl 2-t-butyl-3-isopropylsuccinate, dineopentyl 2-isopropyl-3-cyclohexylsuccinale, dineopentyl 2-isopentyl-3-cyclohexylsuccinate, dineopentyl 2-n-propyl-3-(cyclohexylmethyl)succinate, dineopentyl 2-cyclohexyl-3-cyclopentylsuccinate, dineopentyl 2,2,3,3-tetramethylsuccinate, dineopentyl 2.2,3,3-tetra-ethylsuccinate, dineopentyl 2,2,3,3-tetra-n-propylsuccinate, dineopentyl 2,3-diethyl-2,3-diisopropylsuccinate, diethyl 1,2-cyclohexanedicarboxylate, and diethyl norbomene-2,3-dicarboxylate, including the stereospecific isomer(s) and/or a mixture of the isomers for each aforementioned succinate. In an embodiment, the internal electron donor is diethyl 2,3-diisopropylsuccinate.

In an embodiment, the internal electron donor is a diol ester as represented by the following formula:

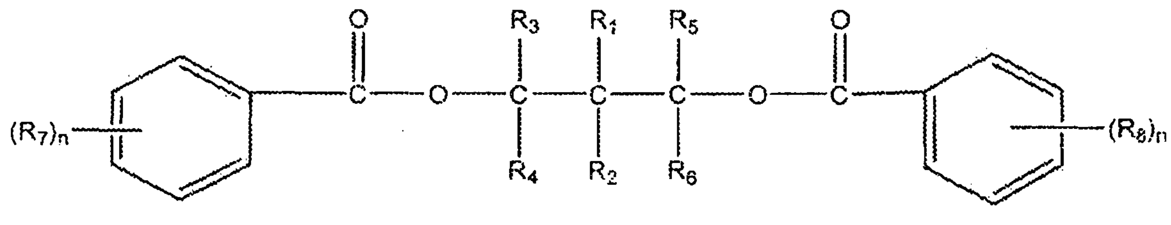

wherein n is an integer from 1 to 5. $R_1$ and $R_2$, may be the same or different, and each may be selected from hydrogen, methyl, ethyl, n-propyl, i-propyl, n-butyl, i-butyl, t-butyl, allyl, phenyl, or halophenyl group. $R_3$, $R_4$, $R_3$, $R_6$, $R_7$, and $R_8$, may be the same or different, and each may be selected from hydrogen, halogen, substituted, or unsubstituted hydrocarbyl having 1 to 20 carbon atoms. $R_1$-$R_6$ groups may optionally contain one or more heteroatoms replacing carbon, hydrogen or both, the hetero-atom selected from nitrogen, oxygen, sulfur, silicon, phosphorus and a halogen. $R_1$-$R_6$ groups may be linked to form a cyclic structure. $R_7$ and $R_8$, may be the same or different, may be bonded to any carbon atom of the 2-, 3-, 4-, 5-, and 6-position of the phenyl ring.

As used herein, a "hydrocarbyl" is a linear or branched aliphatic radical, such as alkyl, alkenyl, and alkynyl; alicyclic radical, such as cycloalkyl, cycloalkenyl; aromatic radical, such as monocyclic or polycyclic aromatic radical, as well as a combination thereof, such as alkaryl and aralkyl.

In an embodiment, $R_1$, $R_2$, $R_3$, $R_4$, $R_5$, and $R_6$ are not all hydrogen simultaneously. At least one group of $R_3$, $R_4$, $R_5$ and $R_6$ may be methyl, ethyl, n-propyl, isopropyl, n-butyl, isobutyl, sec-butyl, tert-butyl, phenyl, or halophenyl. In a further embodiment, one of $R_3$ and $R_4$, $R_5$ and $R_6$, respectively, is hydrogen, and the other is methyl, ethyl, n-propyl, isopropyl, n-butyl, isobutyl, sec-butyl, tert-butyl, phenyl, or halophenyl.

Examples of suitable diol esters include 1,3-propylene-glycol dibenzoate, 2-methyl-1,3-propylene-glycol dibenzoate; 2-ethyl-1,3-propylene-glycol dibenzoate; 2-propyl-1,3-propylene-glycol dibenzoate; 2-butyl-1,3-propylone-glycol dibenzoate; 2,2-dimethyl-1,3-propylene-glycol dibenzoate; (R)-1-phenyl-1,3-propylene-glycol dibenzoate; (S)-1-phenyl-1,3-propylene-glycol dibenzoate; 1,3-diphenyl-1,3-propylene-glycol dibenzoate; 2-methyl-1,3-diphenyl-1,3-propylene-glycol dibenzoate; 2,2-dimethyl-1,3-diphenyl-1,3-propylene-glycol dibenzoate; 2-ethyl-1,3-di(tert-butyl)-1,3-propylene-glycol dibenzoate; 2-butyl-2-ethyl-1,3-propylene-glycol dibenzoate; 2,2-diethyl-1,3-propylene-glycol dibenzoate; 2-dimethoxymethyl-1,3-propylene-glycol dibenzoate; 2-methyl-2-propyl-1,3-propylene-glycol dibenzoate; 2-isoamyl-2-isopropyl-1,3-propylene-glycol dibenzoate; 2-isoamyl-2-isopropyl-1,3-propylene-glycol di(p-chlorobenzote); 2-isoamyl-2-isopropyl-1,3-propylone-glycol di(m-chlorobenzoate); 2-isoamyl-2-isopropyl-1,3-propylene-glycol di(p-methoxybenzoate); 2-isoamyl-2-isopropyl-1,3-propylene-glycol di(p-methylbenzoate); 2,2-diisobutyl-1,3-propylene-glycol dibenzoate; 1,3-diisopropyl-1,3-propylene-glycol di(4-butylbenzoate); 2-ethyl-2-methyl-1,3-propylene-glycol dibenzoate; 2-amino-1-phenyl-1,3-propylene-glycol dibenzoate; 2,4-pentanediol dibenzoate; 3-methyl-2,4-pentanediol dibenzoate; 3-ethyl-2,4-pentanediol dibenzoate; 3-n-propyl-2,4-pentanediol dibenzoate; 3-n-butyl-2,4-pentanediol dibenzoate; 3,3-dimethyl-2,4-pentanediol dibenzoate; (2S,4S)-(+)-2,4-pentanediol dibenzoate; (2R4R)-(+)-2,4-pentanediol dibenzoate; 2,4-pentanediol di(p-chlorobenzoate); 2,4-pentanediol di(p-bromobenzoate); 2,4-pentanediol di(p-methylbenzoate); 2,4-pentanediol di(p-tert-butylbenzoate); 2.4-pentancdiol di(p-butylbenzoate); 2-methyl-1,3-pentanediol dibenzoate; 2-methyl-1,3-pentancdiol di(p-chlorobenzoate); 2-methyl-1,3-pentanediol di(p-methylbenzoate); 2-butyl-1,3-pentanediol di(p-methylbenzoate); 2-methyl-1,3-pentanediol di(p-tert-butylbenzoate); 2,2-dimethyl-1,3-pentanediol dibenzoate; 2-ethyl-1,3-pentanediol dibenzoate: 2-butyl-1,3-pentanediol dibenzoate; 2-allyl-1,3-pentanediol dibenzoate; 2-methyl-1,3-pentanediol dibenzoate; 2-ethyl-1,3-pentanediol dibenzoate; 2-n-propyl-1,3-pentanediol dibenzoate; 2-n-butyl-1,3-pentanediol dibenzoate; 1,3-pentanediol di(p-chlorobenzoate); 1,3-pentanediol di(p-bromobenzoate); 1,3-pentanediol di(p-methylbenzote); 1,3-pentanediol di(p-tert-butylbenzoate); 1,3-pentanediol di(p-butylbenzoate); 2,2,4-trimethyl-1,3-pentanediol dibenzoate; and 3-methyl-1-trifluoromethyl-2,4-pentanediol dibenzoate; 2,4-pentanediol di(p-fluoromethylbenzoate); and 3-butyl-3-methyl-2,4-pentanediol dibenzoate. In an embodiment, the diol ester is 2,4-pentanediol di(p-n-butyl)benzoate.

The Ziegler-Natta procatalyst composition may also include an inert support material. The support material may be an inert solid which does not adversely alter the catalytic performance of the transition metal compound. Examples include metal oxides, such as alumina, and metalloid oxides, such as silica.

The cocalalyst for use with the foregoing Ziegler-Natta procatalyst composition is an aluminum containing composition. Examples of suitable aluminum containing compositions include organoaluminum compounds, such as trialkylaluminum, dialkylaluminum hydride, alkylaluminum dihydride, dialkylaluminum halide, alkylaluminum dihalide, dialkylaluminum alkoxide, and alkylaluminum dialkoxide compounds containing from 1-10, or 1-6 carbon atoms in each alkyl- or alkoxide- group. In an embodiment, the cocatalyst is a $C_{1-4}$ trialkylaluminum compound, such as triethylaluminum (TEAl). The molar ratio of aluminum to titanium is from 10:1 to 100:1, or 25:1 to 70:1, or 30:1 to 60:1, or 35:1 to 50:1 (or any value or subrange therebetween). In an embodiment, the molar ratio of aluminum to titanium to 45:1.

The catalyst composition also includes an external electron donor. As used herein, an "external electron donor" is a compound added independent of procatalyst formation and contains at least one functional group that is capable of donating a pair of electrons to a metal atom. The external electron donor is a mixture of (i) one or more selectivity determining agents (SDA) and (ii) one or more activity limiting agents (ALA). As used herein, "a selectivity determining agent" is a composition which enhances catalyst stereoselectivity, (*ie.,* reduces xylene soluble material in the formant polymer). As used herein, an "activity limiting agent" is a composition that decreases catalyst activity as the polymerization reaction temperature rises above a threshold temperature (*i.e.*, temperature greater than about 85°C or 100°C). The selectivity determining agent and/or the activity limiting agent may provide the catalyst composition with steroselectivy enhancement as well as a self-extinguishing property.

The selectivity determining agent may be an alkoxysilane composition, or a diether composition. The alkoxysilane composition has the general formula: $SiR_m(OR')_{4-m}$(I) where R independently each occurrence is a hydrocarbyl or an amino group optionally substituted with one or more subslituents containing one or more Group 14, 15, 16, or 17 heteroatoms. R contains up to 20 atoms not counting hydrogen and halogen, R' is a $C_{1-20}$ alkyl group, and m is 0, 1, 2 or 3. In an embodiment, R is $C_{6-12}$ aryl or aralkyl, $C_{1-20}$ alkyl, $C_{3-12}$ cycloallyl, $C_{3-12}$ branched alkyl, or $C_{3-12}$ cyclic amino group, R' is $C_{1-4}$ alkyl, and m is 1 or 2. Examples of suitable silane compositions include dicyclopentyldimethoxysilane, di-tert-butyldimethoxysilane, methylcyclohexyldimethoxysilane, ethylcyclohexyldimethoxysilane, diphenyldimethoxysilane, diisopropyldimethoxysilane, di-n-propyldimethoxysilane, diisobutyldimethoxysilane, isobutylisopropyldimethoxysilane, di-n-butyldimethoxysilane, cyclopentyltrimethoxysilane, isopropyltrimethoxysilane, n-propyltrimethoxysilane, n-propyltriethoxysilane, ethyltriethoxysilane, tetramethoxysilane, totraethoxysilane, diethylaminotriethoxysilane, cyclopentylpyrrolidinodimethoxysilane, bis(pyrrolidino)dimethoxysilane, bis(perhydroisoquinolino)dimethoxysilane, and dimethyldimethoxysilane. In an embodiment, the silane composition may be dicyclopentyldimethoxysilane, methylcyclohexyldimethoxysilane, n-propyltrimethoxysilane, or any combination of thereof. In a further embodiment, the alkoxysilane composition includes two or more of the foregoing silane compositions.

In an embodiment, the selectivity determining agent is a diether. The diether may be any diether as previously disclosed herein. In an embodiment, the diether is 2,2-diisobutyl-1,3-dimethoxypropane, 2-isobutyl-2-isopropyl-1,3-dimethoxypropane, or 2.2-dicyclopentyl-1,3-dimethoxypropane. Thus, the internal electron donor may be a first diether and the selectivity determining agent may be a second diether. In a further embodiment, the internal electron donor and the selectivity determining agent are the same composition, *i.e.*, the same diether. The SDA diether may also act as an additional activity limiting agent.

In another embodiment, the selectivity determining agent may include at least one alkoxysilane as disclosed herein and one member selected from a diether as disclosed herein. In a further embodiment, the selectivity determining agent is a mixture of dicyclopentyldimethoxysilane and a diether.

The catalyst composition also includes an activity limiting agent. The activity limiting agent may be a carboxylic acid ester, or a poly(alkene glycol), a poly(alkene glycol) ester, or a polymeric or oligomeric compound that contains more than one ether group. The carboxylic acid ester may be an aromatic mono- or poly-carboxylic acid ester or an aliphatic acid ester. Examples of suitable aromatic carboxylic acids include $C_{1-10}$ alkyl or cycloalkyl esters of aromatic monocarboxylic acids. Suitable substituted derivatives thereof include compounds substituted both on the aromatic ring(s) or the ester group with one or more substituents containing one or more Group 14, 15, 16 or 17 heteroatoms, especially oxygen. Examples of such substituents include (poly)alkylother, cycloalkylether, arylether, aralkylether, alkylthioether, arylthioether, dialkylamine, diarylamine, diaralkylamine, and trialkylsilane groups. The aromatic carboxylic acid ester may be a $C_{1-20}$ hydrocarbyl ester of benzoic acid wherein the hydrocarbyl group is unsubstituted or substituted with one or more Group 14, 15, 16 or 17 heteroatoms containing substituents and $C_{1-20}$ (poly)hydrocarbyl ether derivatives thereof, or $C_{1-4}$ alkyl benzoates and $C_{1-4}$ ring alkylated derivatives thereof, or methyl benzoate, ethyl benzoate, n-propyl benzoate, methyl p-methoxybenzoate, methyl p-ethoxybenzoate, ethyl p-methoxybenzoate, and ethyl p-ethoxybenzoate. In an embodiment, the aromatic monocarboxylic acid is ethyl p-ethoxybenzoate.

In an embodiment, the activity limiting agent is an aliphatic acid ester. The aliphatic acid ester may be a fatty acid ester, may be a $C_4$-$C_{30}$ aliphatic acid ester, may be a mono- or a poly- (two or more) ester, may be straight chain or branched, may be saturated or unsaturated, and any combination thereof. The $C_4$-$C_{30}$ aliphatic acid ester may also be substituted with one or more Group 14, 15, or 16 or 17 heteroatom containing substituents. Examples of suitable $C_4$-$C_{30}$ aliphatic acid esters include $C_{1-20}$ alkyl esters of aliphatic $C_{4-30}$ monocarboxylic acids, $C_{1-20}$ alkyl esters of aliphatic $C_{8-20}$ monocarboxylic acids. $C_{1-4}$ allyl mono- and diesters of aliphatic $C_{4-20}$ monocarboxylic acids and dicarboxylic acids, $C_{1-4}$ alkyl esters of aliphatic $C_{8-20}$ monocarboxylic acids and dicarboxylic acids, and $C_{4-20}$ alkyl mono- or polycarboxylate derivatives of $C_{2-100}$ (poly)glycols or $C_{2-100}$ (poly)glycol ethers. In a further embodiment, the $C_{4-}C_{30}$ aliphatic ester may be isopropyl myristate, di-n-butyl sebacate, (poly)(alkylene glycol) mono- or diacetates, (poly)(alkylene glycol) mono- or di-myristates, (poly)(alkylene glycol) mono- or di-laurates, (poly)(alkylene glycol) mono- or di-oleates, (poly)(alkylene glycol) mono- or di-stearates, glyceryl tri(acetate), glyceryl tri-ester of $C_{2-40}$ aliphatic carboxylic acids, and mixtures thereof.

In an embodiment, the aliphatic acid ester is a fatty acid ester. In one embodiment, the fatty acid ester is a mixture of poly(ethylene glycol) esters. In another embodiment, the fatty acid ester is a mixture of poly(ethylenc glycol) esters commercially available as S-191 from Chem Service, Inc., West Chester. PA.

The catalyst composition may include any of the foregoing internal electron donors (bidentate compounds) in combination with any of the external electron donors disclosed herein. In an embodiment, the present disclosure provides a catalyst composition having one or more Ziegler-Natta procatalyst compositions with one or more transition metal compounds. The catalyst composition also includes an internal electron donor that is a diether. The catalyst composition also includes one or more aluminum containing cocatalysts. The catalyst composition further includes an external electron donor that is a mixture of a selectivity determining agent (SDA) and an activity limiting agent (ALA).

The internal electron donor may be any diether as previously discussed. In an embodiment, the diether is 2,2-diisobutyl-1,3-dimethoxypropane, 2-isobutyl-2-isopropyl-13-dimethoxypropane, 2,2-dicyclopentyl-1,3-dimethoxypropane, or 9,9-bis(methoxymethyl)fluorine. The internal electron donor may be one or any combination of these diethers.

In an embodiment, the selectivity determining agent is an alkoxysilane composition or a diether as discussed above. In a further embodiment, the selectivity determining agent is dicyclopcntyldimethoxysilanc or methylcyclohexyldimethoxysilane. In yet a further embodiment, the selectivity determining agent is 2,2-dicyclopentyl-1,3-dimethoxypropane. In a further embodiment, the external electron donor may be any of these alkoxysilane compositions or a diether in combination with an aromatic mono-or poly-carboxylic acid ester, such as ethyl p-ethoxybenzoate.

The present disclosure provides another catalyst composition. In an embodiment, the catalyst composition includes one or more Ziegler-Natta procatalyst compositions with one or more transition metal compounds. The catalyst composition also includes an internal electron donor that is a succinate. Also included in the catalyst composition is one or more aluminum containing cocatalysts. The catalyst composition further includes an external electron donor that is a mixture of a selectivity determining agent (SDA) and an activity limiting agent (ALA).

The internal electron donor may be any succinate disclosed herein. An example of a suitable succinate is diethyl 2,3-diisopropylsuccinate.

In an embodiment, the selectivity determining agent is an alkoxysilane composition or a diether as discussed above. In a further embodiment, the selectivity determining agent is n-propyltrimelhoxysilane, dicyclopentyldimethoxysilane or methylcyclohexyldimethoxysilane. In yet a further embodiment, the selectivity determining agent is methylcyclohexyldimethoxysilane and the activity limiting agent is ethyl *p*-ethoxybenzoate.

In an embodiment, the selectivity determining agent is a diether and the activity limiting agent is a carboxylic acid ester. For example, the selectivity determining agent may be 2,2-dicyclopentyl-1,3-dimethoxypropane and the activity limiting agent may be a fatty acid ester, such as S-191 which is commercially available from Chem Service, Inc., West Chester. PA.

In an embodiment, the external electron donor includes an alkoxysilane composition and a carboxylic acid ester. In a further embodiment, the selectivity determining agent is dicyclopentyldimethoxysilane or methylcyclohexyldimethoxysilane. In yet a further embodiment, the selectivity determining agent is methylcyclohexyldimethoxysilane and the activity limiting agent is ethyl *p*-ethoxybenzoate.

The present disclosure provides another catalyst composition. In an embodiment, the catalyst composition includes one or more Ziegler-Natta procatalyst compositions with one or more transition metal compounds. The catalyst composition also includes an internal electron donor that is a diol ester. Also included in the catalyst composition is one or more aluminum containing cocatalysts. The catalyst composition further includes an external electron donor that is a mixture of a selectivity determining agent (SDA) and an activity limiting agent (ALA).

The diol ester may be any diol ester disclosed herein. An example of a suitable diol ester for the internal electron donor is 2,4-pentanediol di(p-n-butyl)benzoate.

In an embodiment, the selectivity determining agent is an alkoxysilane composition. The activity limiting agent is a carboxylic acid ester.

In an embodiment, the selectivity determining agent is dicyclopentyldimethoxysilane or methylcyclohexyldimethoxysilane. In a further embodiment, the selectivity determining agent is methylcyclohexyldimethoxysilane and the activity limiting agent is ethyl *p*-ethoxybenzoate.

In any of the foregoing catalyst compositions, the molar ratio of aluminum to total external electron donor may be from 0.25:1 to 20:1 (or any value or subrange therebetween), or from 0.5:1 to 4:1, or from 1:1 to 3:1, or from 2:1 to 3:1 or less than or equal to 2.5:1. As used herein, the "total external electron donor" is the combined amount of the selectivity determining agent and the activity limiting agent present in the external electron donor composition. For polymeric or oligomeric activity limiting agents, the catalyst composition may include a molar ratio of aluminum to external electron donor from 1.0:1 to 50:1 (or any value or subrange therebetween). In an embodiment, the molar ratio of aluminum to total external electron donor is 3:1.

Applicants have surprisingly and unexpectedly discovered that non-self extinguishing catalyst systems with a bidentate internal electron donor such as diether, succinate, alkoxybenzene, and/or diol ester, can be converted into self-extinguishing catalyst compositions by utilizing any of the foregoing external electron donors. Moreover, the Applicants have surprisingly discovered that controlling the aluminum to external electron donor total molar ratio between 0.5:1 to 4:1 advantageously yields a catalyst system that exhibits high productivity, with excellent operability and is self-extinguishing. As used herein, a "self-extinguishing" catalyst is a catalyst that demonstrates decreased activity: (1) at a temperature greater than about 100°C compared to the activity observed under normal polymerization conditions, or (2) at a temperature greater than 85°C compared to the activity observed when the activity limiting agent (ALA) is replaced with the same molar amount of selectivity determining agent (SDA). In addition, as a practical standard, if a polymerization process, especially a fluidized bed, gas-phase polymerization, running at normal processing conditions is capable of interruption and resulting collapse of the bed without adverse consequences with respect to agglomeration of polymer particles, the catalyst composition is said to be "self-extinguishing."

As a standardized measure of polymerization activity at elevated temperatures for use herein, catalyst activities

are adjusted to compensate for different monomer concentrations due to temperature. For example, if liquid phase (slurry or solution) polymerization conditions are used, a correction factor to account for reduced propylene solubility in the reaction mixture at elevated temperatures is included. That is, the catalyst activity is "normalized" to compensate the decreased solubility compared to the lower temperature, especially a 67°C standard. The "normalized" activity at temperature T, or $A_T$, is defined as the measured activity or (weight polymer/weight catalyst/hr) at temperature T, Activity(T), multiplied by a concentration correction factor, [P(67)]/[P(T)], where [P(67)] is the propylene concentration at 67°C and [P(T)] is the propylene concentration at temperature T. The equation for normalized activity is provided below.

$$\text{Normalized Activity } (A_T) = \frac{[P(67)]}{[P(T)]} \times \text{Activity}(T)$$

In the equation, the activity at temperature T is multiplied by a ratio of the propylene concentration at 67 °C to the propylene concentration at temperature T. The resulting normalized activity (A), adjusted for the decrease in propylene concentration with temperature increase, may be used for comparison of catalyst activities under varying temperature conditions. The correction factors are measured and listed below for the conditions used in the liquid phase polymerization.

| 67 °C | 85 °C | 100 °C | 115 °C | 130 °C | 145°C |
|---|---|---|---|---|---|
| 1.00 | 1.42 | 1.93 | 2.39 | 2.98 | 3.70 |

The correction factor assumes that polymerization activity increases linearly with propylene concentration under the conditions employed. The correction factor is a function of the solvent or diluent used. For example, the correction factors listed above are for a common $C_{6-10}$ aliphatic hydrocarbon mixture (Isopar™E, available from Exxon Chemical Company). Under gas phase polymerization conditions, monomer solubility is normally not a factor and activity is generally uncorrected for temperature difference. That is, activity and normalized activity are the same.

The "normalized activity ratio" is defined as $A_T/A_{67}$, where $A_T$ is the activity at temperature T and $A_{67}$ is the activity at 67°C. This value can be used as an indicator of activity change as a function of temperature. For example, an $A_{100}/A_{67}$ equal to 0.30 shows that the catalyst activity at 100°C is only 30 percent of the catalyst activity at 67°C. It has been found that at 100°C, an $A/A_{67}$ ratio of 35% or less typically yields a catalyst system that is self-extinguishing system.

In any of the foregoing embodiments, the external electron donor may include from 50 mole percent to 99 mole percent (or any value or subrange therebetween) of the ALA and from 1 mole percent to 50 mole percent (or any value or subrange therebetween) of the SDA. For polymeric or oligomeric activity limiting agent (such as a poly(alkylene glycol), and/or a poly(alkylene glycol ester)), the external electron donor may include from 5 mole percent to 90 mole percent (or any value or subrange therebetween) of the ALA and from 10 mole percent to 95 mole percent (or any value or subrange therebetween) of the SDA.

The molar ratio of aluminum to SDA may be from 750:1 to 1.25:1 (or any value therebetween), or 150:1 to 1.25:1. or 80:1 to 1.5:1, or 40:1 to 1.67:1, or 20:1 to 2.5:1. or 13:1 to 5:1.

The molar ratio of aluminum to ALA may be 20:1 to 0.5:1 (or any value therebetween), or 6.7:1 to 0.5:1, or 5.7:1 to 0.52:1, or 5:1 to 0.62:1, or 4.4:1 to 0.71:1, or 5.3:1 to 0.5:1. The molar ratio of total external electron donor to titanium may be from 5:1 to 100:1. In an embodiment, the total external electron donor to titanium molar ratio is 30:1. When containing polymeric or oligomeric activity limiting agents (such as a poly(alkylene glycol), and/or a poly(ackylene glycol ester)), the molar ratio of aluminum to ALA may be 200:1 to 1:1 (or any value therebetween), or 70:1 to 1:1, or 50:1 to 1.5:1. or 30:1 to 2:1, or 20:1 to 2.5:1. or 17:1 to 3:1. The molar ratio of total external electron donor to titanium may be from 2:1 to 100:1.

The present catalyst compositions yield a polypropylene composition with high stiffness and high isotacticity (*i.e.,* a low xylene solubles content). Not wishing to be bound by any particular theory, it is believed that the aluminum to external electron donor molar ratio results in a catalyst composition that replicates the self-extinguishing property of third generation catalysts which utilize benzoic acid esters as electron donors without imparting a strong odor of benzoates to resultant polymer. In addition, the present catalyst compositions meet or exceed the activity of conventional fourth generation catalysts without the use of a phthalate-based internal electron donor. Thus, the present catalyst compositions exhibit the self-extinguishing trails of third generation catalysts while meeting or exceeding the activity of fourth generation catalysts.

The polymerization process includes contacting an olefin with a catalyst composition under polymerization conditions. The catalyst composition may be any catalyst composition disclosed herein and includes a Ziegler-Natta procatalyst composition having a transition metal compound and an internal electron donor. The internal electron donor may be any bidentate compound disclosed herein. The catalyst composition also includes an aluminum containing

cocatalyst, and an external electron donor. The external electron donor is a mixture of a selectivity determining agent and an activity limiting agent. The process further includes forming a polyolefin composition.

As used herein, "polymerization conditions" are temperature and pressure parameters within a polymerization reactor suitable for promoting polymerization and/or copolymerization between one or more olefins and the catalyst composition to form the desired polymer. The polymerization process may be performed in any mode including gas phase, slurry, or a bulk polymerization process, the polymerization occurring in one or more reactor(s). The olefin may be a $C_1$-$C_4$ alpha-olefin including such examples as ethylene, propylene, butene and mixtures of these olefins. The olefin may be used in either the gaseous state or the liquid state.

The polymerization process includes contacting propylene with the catalyst composition in a polymerization reactor. The catalyst composition may be any of the foregoing catalyst compositions. The internal electron donor is any of the bidentate compounds as discussed herein.

In an embodiment, the polymerization process may include a pre-polymerization step. Pre-polymerization includes contacting a small amount of the olefin with the procatalyst composition after the procatalyst composition has been contacted with the cocatalyst and the selectivity determining agent and/or the activity limiting agent. Then, the resulting preactivated catalyst stream is introduced into the polymerization reaction zone and contacted with the remainder of the olefin monomer to be polymerized, and optionally one or more of the external electron donor components. Prepolymerization results in the procatalyst composition being combined with the cocatalyst and the selectivity determining agent and/or the activity limiting agent, the combination being dispersed in a matrix of the formant polymer. Optionally, additional quantities of the selectivity determining agent and/or the activity limiting agent may be added.

In an embodiment, the polymerization process may include a pre-activation step. Pre-activation includes contacting the procatalyst composition with the cocatalyst and the selectivity determining agent and/or the activity limiting agent. The resulting preactivated catalyst stream is subsequently introduced into the polymerization reaction zone and contacted with the olefin monomer to be polymerized, and optionally one or more of the external electron donor components. Pre-activation results in the procatalyst composition being combined with the cocatalyst and the selectivity determining agent and/or the activity limiting agent. Optionally, additional quantities of the selectivity determining agent and/or the activity limiting agent may be added.

In an embodiment, the method includes maintaining or controlling the molar ratio of aluminum to total external electron donor from 0.5:1 to 4:1. In other words, the aluminum to total external electron donor ratio is adjusted throughout the polymerization process to hold or control this ratio in the range of 0.5:1 to 4:1, or from 1:1 to 3:1, or 3:1. The polymerization process further includes forming a propylene containing polymer. Thus, the aluminum to external electron donor ratio is controlled by adjusting the amount of external electron donor components introduced into the reaction while maintaining the aluminum at a constant amount, or by adjusting the amount of aluminum while maintaining the amount of external donor, or by using the combination of both methods. For polymeric or oligomeric activity limiting agents, the catalyst composition may include a molar ratio of aluminum to external electron donor from 1.0:1 to 50:1.

In an embodiment, the polymerization process may also include maintaining, adjusting, or otherwise controlling the aluminum to titanium ratio at 45:1.

In an embodiment, the polymerization process includes contacting propylene with the catalyst composition and forming a propylene containing polymer. The propylene containing polymer formed by way of the polymerization process may be a polypropylene homopolymer or a copolymer of propylene and one or more comonomers. The comonomer may be an alpha-olefin having from 2-12 carbon atoms. Examples of suitable comonomers include ethylene, 1-butene, 1-hexene. 4-methyl pentene, 1-heptene, and 1-octene. Consequently, the polypropylene composition may be a polypropylene homopolymer or a polymer with a propylene monomer and one or more comonomers. In an embodiment, the propylene containing polymer has a xylene solubles content from 0.5% to 10.0% by weight, or from 2.0% to 5.0% by weight.

In an embodiment, the polymerization process includes extinguishing, with the catalyst composition, the polymerization process or reaction when the temperature in the polymerization reactor is greater than about 100°C.

In an embodiment, the polymerization process is a gas phase polymerization process, operating in one or more than one reactor. A suitable gas phase polymerization process includes the use of condensing mode as well as super condensing mode wherein gaseous components including added inert low boiling compounds are injected into the reactor in liquid form for purposes of heat removal. When multiple reactors are employed, it is desirable that they operate in series, that is the effluent from the first reactor is charged to the second reactor and additional monomer or different monomer added to continue polymerization. Additional catalyst or catalyst components (that is procatalyst or cocatalyst) may be added, as well as additional quantities of the external electron donor mixture, another external electron donor mixture, or individual alkoxysilanes and/or one or more activity limiting agents.

The polymerization process may include contacting propylene and ethylene with the catalyst composition and forming a propylene and ethylene copolymer. In an embodiment, the polymerization process is conducted in two reactors in which two olefins, such as propylene and ethylene, are contacted to prepare a copolymer. Polypropylene is prepared in the first reactor and a copolymer of ethylene and propylene is prepared in the second reactor in the presence of the polypropylene from the first reactor. Regardless of the polymerization technique employed, it is understood that the

external electron donor, the procatalyst. and/or the cocatalyst thereof may be contacted in the absence of other polymerization components, especially monomer, prior to addition to the reactor. In an embodiment, the foregoing dual polymerization processes are solution polymerizations.

The temperature of the polymerization reactor is from 40 to 130°C or from 60 to 100°C, or from 65°C to 80°C. The foregoing temperatures are average temperatures of the reaction mixture measured at the reactor walls. Isolated regions of the reactor may experience localized temperatures that exceed the foregoing limits.

By way of example, examples of the present disclosure will now be given.

## EXAMPLES

### (1) Catalyst Preparation

Catalyst A (Reference): The catalyst is made according to the following procedure under $N_2$: (1) 12.00 g of MagTi (produced as described in example 1 in US6,825,146) precursor is contacted with 175 ml of $TiCl_4$ solution in MCB (1:1 vol:vol) and then 4.80 ml of 1-ethoxy-2-n-pentoxybenzene (EPB). The mixture is heated to 100°C and maintained at the temperature for 60 minutes followed by filtration to remove the solvent. This procedure is repeated twice. (2) The resulting solid is washed with 200 ml of isooctane at 25°C 3 times followed by filtration. The solid is then dried with a $N_2$ flow. Analysis by X-ray fluorescence shows the solid catalyst contains 4.45 wt% Ti.

Catalyst B: (1) 12.00 g of MagTi precursor and 2.46 g of 9,9-bis(methoxymethyl)fluorene (BMFI) is loaded into a flask under $N_2$. Add 175 ml of $TiCl_4$ solution in MCB (1:1 vol:vol). The mixture is heated to 115°C and maintained at the temperature for 60 minutes followed by filtration to remove the solvent. (2) 175 ml of the $TiCl_4$ solution in MCB (1:1 vol:vol) is added to the solid, the mixture is maintained at 115°C for 30 minutes and then filtered. This procedure is repeated once. (3) The resulting solid is washed with 200 ml of isooctane at 25°C 3 times followed by filtration. The solid is then dried with a $N_2$ flow. Analysis by X-ray fluorescence shows the solid catalyst contains 4.32 wt% Ti.

Catalyst C: (1) 12.00 g of MagTi precursor is contacted with 175 ml of $TiCl_4$ solution in MCB (1:1 vol:vol) and then 2.40 ml of 2.2-diisobutyl-1,3-dimethoxypropane (DiBMP). The mixture is heated to 115°C and maintained at the temperature for 60 minutes followed by filtration to remove the solvent. (2) 175 ml of the $TiCl_4$ solution in MCB (1:1 vol:vol) is added to the solid, the mixture is maintained at 115°C for 30 minutes and then filtered. This procedure is repeated once. (3) The resulting solid is washed with 200 ml of isooctane at 25°C 3 times followed by filtration. The solid is then dried with a $N_2$ flow. Analysis by X-ray fluorescence shows the solid catalyst contains 3.59 wt% Ti.

Catalyst D: The same as Catalyst C except that 2.48 ml of diethyl 2,3-diisopropylsuccinate is used instead of 2.40 ml of 2.2-diisobutyl-1,3-dimethoxypropane. The Ti content is 3.75 wt%.

Catalyst E: The same as Catalyst C except that (1) 2.88 ml of 2,4-pentanediol di(p-n-butyl)benzoate is used instead of 2.40 ml of 2,2-diisobutyl-1,3-dimethoxypropane, and (2) 200 ml of $TiCl_4$ solution was used instead of 175 ml in each $TiCl_4$ contacting. The Ti content is 3.92 wt%.

Catalyst F: (1) 3.00 g of MagTi precursor is contacted with 60 ml of $TiCl_4$ solution in MCB (1:1 vol:vol) and then 0.42 ml of 2,2-dicyclopentyl-1,3-dimethoxypropane. The mixture is heated to 115°C and maintained at the temperature for 60 minutes followed by filtration to remove the solvent. (2) 60 ml of the $TiCl_4$ solution in MCB (1:1 vol:vol) was added to the solid, the mixture was maintained at 115°C for 30 minutes and then filtered. This procedure is repeated once. (3) The resulting solid is washed with 70 ml of isooctane at 25°C 3 times followed by filtration. The solid is then dried with a $N_2$ flow. Analysis by X-ray fluorescence shows the solid catalyst contains 4.79 wt% Ti.

Catalyst G: The same as Catalyst F except that 0.42 ml of 2,2-dicyclopentyl-1,3-dimethoxypropane also added to the reaction mixture in the second $TiCl_4$ contacting. The Ti content of the solid catalyst is 2.81 wt%.

### (2) Polymerization

The particle size of the catalyst powder is reduced by stirring the catalyst solid with a stir bar for 30-45 minutes. Catalyst slurries are then prepared In toluene. The concentration of the slurries and loadings for each catalyst are listed below.

| Catalyst | Ti (wt%) | Slurry Concentration (μg/mL) | Loading (μg/reactor) |
|---|---|---|---|
| A | 4.45 | 144 | 39.5 |
| B | 4.32 | 148 | 40.7 |
| C | 3.59 | 178 | 49.0 |
| D | 3.75 | 170 | 46.9 |
| E | 3.92 | 163 | 44.8 |
| F | 4.79 | 213 | 58.6 |

(continued)

| Catalyst | Ti (wt%) | Slurry Concentration (μg/mL) | Loading (μg/reactor) |
|---|---|---|---|
| G | 2.81 | 232 | 63.9 |

All SDAs and ALAs are diluted to 0.005 M in Isopar E™, except S-191 which is dissolved in toluene before injection into the Parallel Polymerization Reactors (PPRs, from Symyx Technologies, Inc.). TEAl (triethylaluminum) is prepared for Isopar E™ and used as either 0.02 or 0.1M solutions.

The purged PPR reactors are heated to 50°C, TEAl and Isopar E™ make-up solvent are added to each reactor, followed by the addition of $H_2$ to a stabilised pressure of 0.34 atm. Reactors are heated to the assigned temperature (67, 100 or 115°C). Propylene is added to 6.80 atm and allowed to stabilize for 10 min. To each reactor is added SCA or a mixture of SDA and ALA and a 500 ul of Isopar E™ chaser and immediately followed by the addition of catalyst (275 ul) and a 500 ul Isopar E™ chaser. Reactions are quenched with $CO_2$ after 60 minutes or when the maximum relative conversion of 100 is reached.

(3) XS Measurement

Percent xylene solubles (%XS) in polypropylene (PP) is a material property listed on many product specification sheets and the measurement procedure is specified by ASTM method D 5492-98. The method determines the fraction of a PP sample which is soluble in o-xylene at 25°C. The soluble fraction has a good correlation to the percent amorphous fraction in PP. The amorphous fraction content is closely related to performance characteristics of the final product and is also critical to process control. A tool is used to measure % polypropylene (PP) solubles in trichlorobenzene (%TCBs) and correlate this value with % xylene solubles based on PP standards. The system design is based on the Cavro liquid manipulator footprint and is housed with custom-made peripherals to manipulate, cap, filter, and analyze hot polymer solutions. The Cavro robotic system and a Polymer Char IR4 filter based infrared detector to determine polymer solution concentrations are interfaced to a personal computer. The versatility of the unit enables it to be used to dilute polymer samples and create replicate samples in a stand-alone mode. Forty-eight samples can be processed in 10 hours which is a ~10X increase compared to similar manually ASTM prepared methods using as little as 30 mg vs. the standard 2 gm of sample. In general the diluted samples arc heated to and held at 160°C during analysis, individual samples are then transferred to a sampling block which heats the sample to 175°C for analysis via the IR4 infrared detector. When all samples have been analyzed, the sample block is cooled to 40°C for 1 hour, filtered, warmed to 60°C to keep remaining polypropylene in solution and then reanalyzed at 175°C with the IR4. The difference in before and after readings provides the bases for the final %TCB (%XS) value. TCB solubles are measured only for the cells that produced enough polymer.

Table 1

**Table. 1 Catalyst Performance**

| Catalyst | SDA | ALA | Al/(SDA + ALA) (mol/mol) | SDA/ALA/Ti (mol/mol/mol) | SDA/ALA (mol%) | Temp (°C) | Activity (kg/g/hr) | | | | Average Activity (kg/g/hr) | Normalized Activity (kg/g/hr) | $A_T/A_{67}$ (%) | Average XS (%) |
|---|---|---|---|---|---|---|---|---|---|---|---|---|---|---|
| B | DCPDMS | ** | 3.0 | 30/0/1 | 100/0 | 67 | 12.31 | 10.34 | 10.40 | | 11.02 | 11.02 | 100 | 3.19 |
| | | | | | | 100 | 2.79 | 3.08 | 2.72 | | 2.86 | 5.53 | 50 | 3.99 |
| | | | | | | 115 | 1.02 | 1.08 | 0.82 | | 0.97 | 2.33 | 21 | |
| | DCPDMP | PEEB | 3.0 | 1.5/28.5/1 | 5/95 | 67 | 13.34 | 14.04 | 12.14 | | 13.17 | 13.17 | 100 | 2.63 |
| | | | | | | 100 | 0.75 | 0.83 | 0.94 | | 0.84 | 1.62 | 12 | |
| | | | | | | 115 | 0.22 | 0.22 | 0.21 | | 0.22 | 0.52 | 4 | |
| | MChDMS | ** | 3.0 | 30/0/1 | 100/0 | 67 | 15.30 | 13.61 | 14.57 | | 14.49 | 14.49 | 100 | 3.02 |
| | | | | | | 100 | 2.59 | 2.96 | 2.84 | | 2.80 | 5.40 | 37 | 3.54 |
| | | | | | | 115 | 1.25 | 1.26 | 1.11 | | 1.21 | 2.88 | 20 | 4.77 |
| | MChDMS | PEEB | 3.0 | 1.5/28.5/1 | 5/95 | 67 | 13.95 | 16.77 | 14.25 | | 14.99 | 14.99 | 100 | 4.87 |
| | | | | | | 100 | 0.61 | 0.85 | 0.67 | 0.85 | 0.75 | 1.44 | 10 | |
| | | | | | | 115 | 0.19 | 0.21 | 0.14 | 0.24 | 0.20 | 0.47 | 3 | |
| C | MChDMS | ** | 3.0 | 30/0/1 | 100/0 | 67 | 8.09 | 7.05 | 5.10 | | 6.75 | 6.75 | 100 | 2.53 |
| | | | | | | 100 | 0.88 | 0.83 | 1.04 | | 0.92 | 1.77 | 26 | 6.03 |
| | | | | | | 115 | 0.32 | 0.26 | 0.27 | | 0.28 | 0.68 | 10 | |
| | MChDMS | PEEB | 3.0 | 1.5/28.5/1 | 5/95 | 67 | 7.65 | 6.14 | 6.87 | | 6.89 | 6.89 | 100 | 2.85 |
| | | | | | | 100 | 0.48 | 0.33 | 0.41 | | 0.41 | 0.78 | 11 | |
| | | | | | | 115 | 0.05 | 0.04 | 0.08 | | 0.06 | 0.14 | 2 | |
| F | MChDMS | ** | 3.0 | 30/0/1 | 100/0 | 67 | 9.86 | 10.40 | 8.66 | | 9.64 | 9.64 | 100 | 3.48 |
| | | | | | | 100 | 1.85 | 1.54 | 1.63 | | 1.67 | 3.23 | 34 | 5.29 |
| | | | | | | 115 | 0.50 | 0.44 | 0.52 | | 0.49 | 1.16 | 12 | |
| | MChDMS | PEEB | 3.0 | 1.5/28.5/1 | 5/95 | 67 | 15.73 | 14.75 | 12.77 | | 14.42 | 14.42 | 100 | 4.17 |
| | | | | | | 100 | 1.63 | 1.41 | 1.59 | | 1.54 | 2.98 | 21 | 7.23 |
| | | | | | | 115 | 0.72 | 0.74 | 0.90 | | 0.79 | 1.88 | 13 | |
| G | DCPDMS | ** | 3.0 | 30/0/1 | 100/0 | 67 | 5.05 | 4.38 | 5.03 | | 4.82 | 4.82 | 100 | 1.32 |
| | | | | | | 100 | 0.80 | 0.96 | 0.66 | | 0.81 | 1.56 | 32 | 2.61 |
| | | | | | | 115 | 0.33 | 0.26 | 0.25 | | 0.28 | 0.67 | 14 | |
| | DCPDMP | PEEB | 3.0 | 1.5/28.5/1 | 5/95 | 67 | 6.95 | 5.40 | 5.66 | | 6.00 | 6.00 | 100 | 1.20 |
| | | | | | | 100 | 0.23 | 0.97 | 0.60 | | 0.60 | 1.16 | 19 | 2.85 |
| | | | | | | 115 | 0.28 | 0.38 | 0.28 | | 0.31 | 0.75 | 12 | |
| A | TMPY | ** | 3.0 | 30/0/1 | 100/0 | 67 | 13.78 | 10.29 | | | 12.04 | 12.04 | 100 | 14.23 |
| | | | | | | 100 | 5.67 | 5.35 | 4.35 | | 5.12 | 9.89 | 82 | 13.20 |
| | | | | | | 115 | 2.38 | 2.68 | 2.43 | | 2.50 | 5.98 | 50 | 23.18 |
| | TMPY | PEEB | 3.0 | 1.5/28.5/1 | 5/95 | 67 | 8.45 | 8.50 | | | 8.48 | 8.48 | 100 | 8.01 |
| | | | | | | 100 | 0.60 | 0.56 | 0.69 | | 0.62 | 1.19 | 14 | |
| | | | | | | 115 | 0.31 | 0.19 | 0.23 | | 0.24 | 0.58 | 7 | |
| • ** | TMPY | DiBDMP* | 3.0 | 1.5/28.5/1 | 5/95 | 67 | 6.17 | 6.51 | 8.66 | 7.11 | 7.11 | 7.11 | 100 | 5.93 |
| | | | | | | 100 | 1.10 | 0.93 | 1.09 | | 1.04 | 2.01 | 28 | |
| | | | | | | 115 | 0.48 | 0.46 | 0.52 | | 0.49 | 1.16 | 16 | |
| A | MChDMS | ** | 3.0 | 30/0/1 | 100/0 | 67 | 4.51 | 5.59 | 7.04 | | 5.71 | 5.71 | 100 | 6.73 |
| | | | | | | 100 | 1.71 | 1.39 | 1.43 | | 1.51 | 2.91 | 31 | 7.78 |
| | | | | | | 115 | 0.35 | 0.64 | 0.60 | | 0.60 | 1.43 | 25 | |
| | MChDMS | PEEB | 3.0 | 1.5/28.5/1 | 5/95 | 67 | 3.67 | 5.52 | 4.42 | | 4.54 | 4.54 | 100 | 7.68 |
| | | | | | | 100 | 0.21 | 0.31 | 0.25 | | 0.26 | 0.50 | 11 | |
| | | | | | | 115 | 0.09 | 0.08 | 0.04 | | 0.07 | 0.17 | 4 | |
| D | DCPDMS | ** | 3.0 | 30/0/1 | 100/0 | 67 | 5.95 | 4.96 | 5.43 | | 5.45 | 5.45 | 100 | 1.96 |
| | | | | | | 100 | 2.83 | 1.19 | 0.96 | | 1.66 | 3.20 | 59 | 3.78 |
| | | | | | | 115 | 0.24 | 0.31 | 0.61 | | 0.39 | 0.92 | 17 | |
| | DCPDMP | S-191 | 16.7 | 3/27/1 | 10/90 | 67 | 7.20 | 7.32 | 7.17 | 8.27 | 7.54 | 7.54 | 100 | 2.90 |
| | | | | | | 100 | 0.08 | 0.08 | 0.09 | 0.07 | 0.08 | 0.15 | 2 | |
| | | | | | | 115 | 0.09 | 0.08 | 0.08 | 0.08 | 0.08 | 0.20 | 3 | |
| D | MChDMS | ** | 3.0 | 30/0/1 | 100/0 | 67 | 7.65 | 8.48 | 7.50 | | 7.88 | 7.88 | 100 | 2.77 |
| | | | | | | 100 | 2.26 | 1.49 | 1.25 | | 1.67 | 3.22 | 41 | 4.45 |
| | | | | | | 115 | 0.46 | 0.43 | 0.49 | | 0.46 | 1.10 | 14 | |
| | MChDMS | PEEB | 3.0 | 1.5/28.5/1 | 5/95 | 67 | 7.90 | 9.10 | 9.67 | | 8.89 | 8.89 | 100 | 3.28 |
| | | | | | | 100 | 0.66 | 0.49 | 0.62 | 0.50 | 0.57 | 1.10 | 12 | |
| | | | | | | 115 | 0.11 | 0.12 | 0.09 | 0.12 | 0.11 | 0.26 | 3 | |
| E | MChDMS | ** | 3.0 | 30/0/1 | 100/0 | 67 | 8.54 | 8.64 | 7.97 | | 8.38 | 8.38 | 100 | 3.09 |
| | | | | | | 100 | 2.38 | 1.97 | 1.62 | | 1.99 | 3.84 | 46 | 1.36 |
| | | | | | | 115 | 0.66 | 0.81 | 0.66 | | 0.71 | 1.70 | 30 | 2.70 |
| | MChDMS | PEEB | 3.0 | 1.5/28.5/1 | 5/95 | 67 | 14.89 | 5.38 | 7.30 | | 9.19 | 9.19 | 100 | 4.38 |
| | | | | | | 100 | 0.70 | 0.57 | 0.42 | 1.18 | 0.72 | 1.38 | 15 | 4.34 |
| | | | | | | 115 | 0.09 | 0.22 | 0.11 | 0.14 | 0.14 | 0.33 | 4 | |

DCPDMP 2,2-Dicyclopentyl-1,3-dimethoxypropane
DCPDMS Dicyclopentyldimethoxysilane
DiBDMP 2,2-Diisobutyl-1,3-dimethoxypropane
MChDMS Methylcyclohexyldimethoxysilane
PEEB Ethyl p-Ethoxybenzoate
S-191 POE (15) coco fatty acids ester
TMPY ** 2,2,6,6-tetramethylpiperidine

** : Reference

The data Table 1 show that catalyst activity at elevated temperature, such as at 100°C and 115°C, is substantially reduced when a portion of SDA is replaced with ALA while maintaining high catalyst activity and stereoselectivity.

## Claims

**1.** A catalyst composition comprising:

one or more Ziegler-Natta procatalyst compositions comprising one or more transition metal compounds and an internal electron donor comprising a bidentate compound containing at least two oxygen-containing functional groups which are separated by at least one saturated $C_2$-$C_{10}$ hydrocarbon chain, the bidentate compound excluding phthalates;
one or more aluminum containing cocatalysts; and
an external electron donor comprising a mixture of a selectivity determining agent selected from the group consisting of an alkoxysilane composition and a diether and an activity limiting agent selected from the group consisting of an aromatic mono- or polycarboxylic acid ester and fatty acid esters.

2. The catalyst composition of claim 1 wherein the bidentate compound is selected from the group consisting of a diether, a succinate, a glutarate, a diol ester, and combinations thereof.

3. The catalyst composition of claim 2 wherein the bidentate compound comprises a diether.

4. The catalyst composition of claim 3 wherein the diether is selected from the group consisting of 2,2-diisobutyl-1,3-dimethoxypropane, 2-isobutyl-2-isopropyl-1,3-dimethoxypropane, 2,2-dicyclopentyl-1,3-dimethoxypropane, and 9,9-bis(methoxymethyl)fluorene.

5. The catalyst composition of claim 1 wherein the selectivity determining agent is selected from the group consisting of n-propyltrimethoxysilane, dicyclopentyldimethoxysilane, methylcyclohexyldimethoxysilane, and combinations thereof.

6. The catalyst composition of claim 2 wherein the bidentate comprises a succinate.

7. The catalyst composition of claim 6 wherein the succinate is diethyl 2,3-diisopropylsuccinate.

8. The catalyst composition of claim 6 wherein the selectivity determining agent is selected from the group consisting of n-propyltrimethoxysilane, dicyclopentyldimethoxysilane, methylcyclohexyldimethoxysilane, and combinations thereof and the activity limiting agent is selected from the group consisting of ethyl p-ethoxybenzoate and fatty acid esters.

9. The catalyst composition of claim 6 wherein the external electron donor comprises 2,2-dicyclopentyl-1,3-dimethoxypropane and a fatty acid ester.

10. The catalyst composition of claim 2 wherein the bidentate comprises a diol ester.

11. The catalyst composition of claim 10 wherein the diol ester is 2,4-pentanediol di(p-n-butyl)benzoate.

12. The catalyst composition of any of claims 1-11 comprising a molar ratio of aluminum to total external electron donor from 0.5:1 to 4:1.

13. The catalyst composition of any of claims 1-12 wherein the catalyst composition is self-extinguishing.

**Patentansprüche**

1. Katalysatorzusammensetzung, umfassend:

eine oder mehrere Ziegler-Natta-Prokatalysatorzusammensetzungen, umfassend eine oder mehrere Übergangsmetallverbindungen und einen internen Elektronendonator, umfassend eine zweizähnige Verbindung, die mindestens zwei sauerstoffhaltige funktionelle Gruppen enthält, die durch mindestens eine gesättigte $C_2$-$C_{10}$-Kohlenwasserstoffkette getrennt sind, wobei die zweizähnige Verbindung Phthalate ausschließt;
einen oder mehrere aluminiumhaltige Co-Katalysatoren; und
einen externen Elektronendonator, umfassend eine Mischung aus einem Selektivität-bestimmenden Mittel, das ausgewählt ist aus der Gruppe bestehend aus einer Alkoxysilanzusammensetzung und einem Diether, und einem Aktivität-begrenzenden Mittel, das ausgewählt ist aus der Gruppe bestehend aus einem aromatischen Mono- oder Polycarbonsäureester und Fettsäureestern.

2. Katalysatorzusammensetzung nach Anspruch 1, wobei die zweizähnige Verbindung ausgewählt ist aus der Gruppe bestehend aus einem Diether, einem Succinat, einem Glutarat, einem Diolester und Kombinationen davon.

3. Katalysatorzusammensetzung nach Anspruch 2, wobei die zweizähnige Verbindung einen Diether umfasst.

4. Katalysatorzusammensetzung nach Anspruch 3, wobei der Diether ausgewählt ist aus der Gruppe bestehend aus 2,2-Diisobutyl-1,3-dimethoxypropan, 2-Isobutyl-2-isopropyl-1,3-dimethoxypropan, 2,2-Dicyclopentyl-1,3-dimethoxypropan und 9,9-Bis(methoxymethyl)fluoren.

5. Katalysatorzusammensetzung nach Anspruch 1, wobei das Selektivitätbestimmende Mittel ausgewählt ist aus der Gruppe bestehend aus n-Propyltrimethoxysilan, Dicyclopentyldimethoxysilan, Methylcyclohexyldimethoxysilan und Kombinationen davon.

6. Katalysatorzusammensetzung nach Anspruch 2, wobei die zweizähnige Verbindung ein Succinat umfasst.

7. Katalysatorzusammensetzung nach Anspruch 6, wobei das Succinat Diethyl-2,3-diisopropylsuccinat ist.

8. Katalysatorzusammensetzung nach Anspruch 6, wobei das Selektivitätbestimmende Mittel ausgewählt ist aus der Gruppe bestehend aus n-Propyltrimethoxysilan, Dicyclopentyldimethoxysilan, Methylcyclohexyldimethoxysilan und Kombinationen davon, und das Aktivität-begrenzende Mittel ausgewählt ist aus der Gruppe bestehend aus Ethyl-p-ethoxybenzoat und Fettsäureestern.

9. Katalysatorzusammensetzung nach Anspruch 6, wobei der externe Elektronendonator 2,2-Dicyclopentyl-1,3-dimethoxypropan und einen Fettsäureester umfasst.

10. Katalysatorzusammensetzung nach Anspruch 2, wobei die zweizähnige Verbindung einen Diolester umfasst.

11. Katalysatorzusammensetzung nach Anspruch 10, wobei der Diolester 2,4-Pentandiol-di(p-n-butyl)benzoat ist.

12. Katalysatorzusammensetzung nach einem der Ansprüche 1-11, umfassend ein Molverhältnis von Aluminium zu externem Gesamtelektronendonator von 0,5:1 bis 4:1.

13. Katalysatorzusammensetzung nach einem der Ansprüche 1-12, wobei die Katalysatorzusammensetzung selbstverlöschend ist.

**Revendications**

1. Composition catalytique comprenant :

   au moins une composition procatalytique du type Ziegler-Natta comprenant au moins un composé de métal de transition et un donneur d'électron interne comprenant un composé bidenté contenant au moins deux groupes fonctionnels contenant de l'oxygène qui sont séparés par au moins une chaîne d'hydrocarbure en $C_2$-$C_{10}$, le composé bidenté excluant les phthalates ;
   au moins un cocatalyseur contenant de l'aluminium ; et
   un donneur d'électron externe comprenant un mélange d'un agent déterminant la sélectivité choisi dans le groupe constitué par une composition d'alcoxysilane et un diéther et un agent de limitation d'activité choisi dans le groupe constitué par un ester d'acide mono-ou poly-carboxylique et des esters d'acides gras.

2. Composition catalytique selon la revendication 1, dans laquelle le composé bidenté est choisi dans le groupe constitué par un diéther, un succinate, un glutarate, un ester diol et des combinaisons de ceux-ci.

3. Composition catalytique selon la revendication 2, dans laquelle le composé bidenté comprend un diéther.

4. Composition catalytique selon la revendication 3, dans laquelle le diéther est choisi dans le groupe constitué par 2,2-diisobutyl-1,3-diméthoxypropane, 2-isobutyl-2-isopropyl-1,3-diméthoxypropane, 2,2-dicyclopentyl-1,3-diméthoxypropane et 9,9-bis(méthoxyméthyl)fluorène.

5. Composition catalytique selon la revendication 1, dans laquelle l'agent déterminant la sélectivité est choisi dans le groupe constitué par n-propyltriméthoxysilane, dicyclopentyldiméthoxysilane, méthylcyclohexyldiméthoxysilane et des combinaisons de ceux-ci.

6. Composition catalytique selon la revendication 2, dans laquelle le bidentate comprend un succinate.

7. Composition catalytique selon la revendication 6, dans laquelle le succinate est diéthyl 2,3-diisopropylsuccinate.

8. Composition catalytique selon la revendication 6, dans laquelle l'agent déterminant la sélectivité est choisi dans le

groupe constitué par n-propyltriméthoxysilane, dicyclopentyldiméthoxysilane, méthylcyclohexyldiméthoxysilane et des combinaisons de ceux-ci et l'agent de limitation d'activité est choisi dans le groupe constitué par l'éthyl p-éthoxybenzoate et des esters d'acides gras.

**9.** Composition catalytique selon la revendication 6, dans laquelle le donneur d'électron externe comprend 2,2-dicyclopentyl-1,3-diméthoxypropane et un ester d'acide gras.

**10.** Composition catalytique selon la revendication 2, dans laquelle le bidentate comprend un ester diol.

**11.** Composition catalytique selon la revendication 10, dans laquelle l'ester diol est 2,4-pentanediol di(p-n-butyl)benzoate.

**12.** Composition catalytique selon l'une quelconque des revendications 1 à 11 comprenant un rapport molaire d'aluminium à un donneur d'électron externe total allant de 0,5/1 à 4/1.

**13.** Composition catalytique selon l'une quelconque des revendications 1 à 12, la composition catalytique étant auto-extinguible.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6825146 B